# FASCICULE DE BREVET EUROPEEN

(11) **EP 1 678 451 B1**
(45) Date de publication et mention de la délivrance du brevet: **17.06.2009**
(21) Numéro de dépôt: 04817153.2
(22) Date de dépôt: 08.10.2004
(51) Int. Cl.: F26B 3/20, F23G 5/04

(54) **PROCEDE ET DISPOSITIF D OXYDATION THERMIQUE DES BOUES ORGANI QUES**
VERFAHREN UND VORRICHTUNG ZUR THERMISCHEN OXIDATION VON ORGANISCHEM SCHLAMM
METHOD AND DEVICE FOR THE THERMAL OXIDATION OF ORGANIC SLUDGE

(30) Priorité: 10.10.2003 FR 0311957
(43) Date de publication de la demande: 12.07.2006
(73) Titulaire: Sennesael, Etienne, 34140 Mèze (FR)
(72) Inventeur: Sennesael, Etienne, 34140 Mèze (FR)
(74) Mandataire: Roman, Michel
(86) Numéro de dépôt international: PCT/FR2004/002551
(87) Numéro de publication internationale: WO 2005/036078

(56) Documents cités:
- EP-A- 0 609 614
- FR-A- 2 810 312
- GB-A- 423 934
- US-A- 4 248 164
- US-A- 5 762 010
- US-A- 6 163 980

## Description

La présente invention concerne un procédé et son dispositif pour le traitement thermique des boues organiques produites parles stations d'épuration des eaux polluées tant urbaines qu'industrielles ou militaires ou sur navire, procédé par lequel on brasse une boue organique dont la siccité est comprise entre 12 et 18 %, avec des billes d'acier dont la température est comprise entre 145 °C et 165 °C, afin d'obtenir un mélange de billes et de particules sèches combustibles; mélange auquel on ajoute de l'air chaud à une température comprise entre 350 °C et 395°C pour obtenir une autocombustion des dites particules par oxydation thermique.

Il est bien connu que les boues organiques issues des stations d'épuration posent un réel problème d'élimination depuis la mise en garde des milieux scientifiques sur la nécessité de préserver la qualité de l'eau et des sols, et depuis l'obligation, imposée par le législateur, du principe de précaution envers les organismes pathogènes et les éléments trace métalliques.

Les principales filières légales pour leur élimination sont l'épandage sur terres agricoles après hygiénisation thermique (chauffage ou compostage) ou chimique (chaulage à la chaux vive), séchage et épandage du produit sec, incinération avec ou sans séchage préalable, chaulage poussé et mise en décharge. étanche.

Ces boues sont classées déchets dangereux par la Directive n° 91 / 689 / CEE publiée au JOCE n° L377 du 31/12 /1991, annexe IB/30, annexe III/H 9, annexe III/H14

Les signataires de la convention d'Oslo avaient accepté d'en interdire le rejet en mer ou en rivière à l'échéance du 31/12/1998, en 2001 ces rejets en mer ou en rivière étaient encore de 32 000 000 m3 / an pour cinq des pays européens signataires,

La loi française n° 92-3 du 03/01/1992, dite loi sur l'eau, publiée au JO du 04/01/1992, article 35-II, stations d'épuration et élimination des boues, fait obligation à toutes les municipalités d'être en conformité pour le 31/12/2005 au plus tard,

La loi française n° 92-646 du 13/07/1992, publiée au JO du 14/07/1992, par son article 1^{er}-III, en interdit la mise en décharge ordinaire.

Ces boues organiques contiennent environ 98 % d'eau en sortie du bassin épaississeur, et encore 80 à 92 % d'eau après déshydratation mécanique. Ces boues sont très combustibles après séchage.

L'une des alternatives pour l'élimination des boues est donc l'incinération avec ou sans séchage préalable, mais cette filière n'est que partiellement exploitée du fait de ses coûts d'investissement et d'exploitation.

Il existe des systèmes pour injecter directement la boue liquide dans les incinérateurs d'ordures ménagères, d'autres mélangent la boue préalablement chaulée avec les ordures ménagères afin d'obtenir un combustible homogène, d'autres encore effectuent un séchage de cette boue, quelquefois avec bouletage, avant introduction dans le four d'incinération, une variante est l'incinération en cimenterie.

Les fours d'incinération peuvent être de type rotatif, à lit fluidisé, cycloniques ou à grilles rotatives, ils sont principalement des adaptations des matériels exploités dans le grillage des minerais, la fabrication de la chaux et du ciment.

Le point commun de tous les systèmes est la recherche d'une extraction optimale de l'eau libre avant de procéder à l'incinération des dites boues.

Cette contrainte technique est à l'origine de nombreux procédés et dispositifs de séchage des boues, lesquels procédés et dispositifs figurent dans toute la littérature universitaire ou technique destinée aux étudiants dans la science du génie des procédés, ainsi que les documentations techniques ou commerciales destinées aux élus et aux exploitants de stations d'épuration, les archives des organismes de la propriété industrielle sont également riches de procédés et dispositifs concernant le séchage et l'incinération des boues.

L'Agence de l'eau, organe du Ministère de l'Environnement en France, a publié deux études très complètes:
Etat de l'art sur le séchage thermique des boues urbaines/industrielles, S. Ressent, 07/1998 Campagnes de mesures sur sécheurs de boues de stations d'épuration, S.Ressent, 02/2000.

De nombreux sécheurs sont du type à convection, certains exploitent la conduction avec film mince, les plus perfectionnés sont de type mixte intégrant un chauffage direct et un chauffage indirect, il est également employé des systèmes de vis sans fin avec des spires en secteurs ou des bras de mélange chauffés au moyen d'un fluide caloporteur tels que huiles thermiques ou vapeur, quelques uns sont de type cycloniques ou « flash » ; le plus souvent il est utilisé un combustible fossile tel que le gaz ; l'énergie électrique et la vapeur recompressée sont également utilisées.

Il est bien connu que le grand handicap du séchage de la boue organique est sa particularité à coller, ce qui encrasse les échangeurs et oblige à une maintenance fastidieuse, ce qui implique de recourir à des dimensionnements volumineux pour la construction des sécheurs, donc très coûteux.

Pour exemple, un sécheur mixte en film mince avec une surface d'échange de 94,25 m2 nécessite un cylindre d'une longueur de 10 m et un diamètre de 3 m, il est construit en acier de 12 mm d'épaisseur, son poids est de 8 822 kg et représente un volume de 71 m³ auquel il faut ajouter l'enveloppe, la mécanique, la motorisation, le brûleur ou l'échangeur, les évacuations de vapeur, les asservissements, etc.

En règle générale, on sèche la boue dans un atelier spécifique, avec ou sans ajout de chaux vive ou autre minéral pour combattre le collage, et on transporte ensuite la matière plus ou moins sèche vers le four d'incinération, les petites et moyennes stations ont en plus la contrainte d'avoir à transporter leurs boues vers un atelier de séchage externe avant d'accéder à l'incinérateur.

Les systèmes modernes les plus économes en énergie sont adossés à une usine d'incinération des ordures ménagères et exploitent la chaleur de l'incinérateur, fumées ou vapeur, pour réaliser le séchage. Rares sont les stations d'épuration qui disposent d'un incinérateur intégré sur site, cette technologie étant réservée aux très grandes villes capables d'assumer un tel investissement.

Sous réserve de cette exception, toutes les municipalités et collectivités civiles ou militaires, ainsi que les entreprises et services assimilés, qui génèrent des boues, sont dans l'obligation de manutentionner, inerter et transporter leurs boues vers un point de stockage ou de transformation ou de traitement tel que l'incinérateur le plus proche, chaque étape du processus étant évidemment une charge interne de gestion ou facturée par un prestataire délégué. Le coût de ces prestations est une des composantes du prix de l'assainissement et du prix de l'eau.

Selon la présente invention, il est possible d'effectuer in situ le traitement thermique complet de la boue en intégrant le séchage et la combustion sur le site même de la station d'épuration au moyen d'un nouveau procédé objet de l'invention, le dispositif subséquent étant spécialement conçu pour mettre en oeuvre ie dit procédé. Ce procédé et son dispositif permettent de réduire les coûts d'élimination des boues organiques tout en supprimant les risques sanitaires et phytotoxiques inhérents aux filières de substitution utilisées par économie (décharges, épandage sur terres agricoles, rejet en mer ou en rivières).

Selon la présente invention, on remplace un échangeur classique, cylindrique, tubulaire, à plaques ou autre, par des billes dont la somme des surfaces sphériques est équivalente à la surface de l'échangeur à remplacer. Par comparaison avec l'exemple précédemment cité, on obtiendra la même surface d'échance avec 300 000 billes d'acier d'un diamètre de 10 mm, pour un poids de 1 225 kg, et un volume de 0,251 m³ à comparer aux 8 822 kg et aux 71 m³ du sécheur mixte à film mince ci-avant.

La technologie du développement de surfaces au moyen de billes est appliquée principalement dans l'industrie pétrochimique pour le reformage catalytique, on a réduit le poids des équipements et augmenté les rendements en utilisant des billes en céramique enduites avec un métal catalyseur, ces billes sont incorporées dans le flux de l'hydrocarbure à traiter. Le brevet FR 2 810 312 décrit l'utilisation d'une telle technologie dans le domaine du traitement de boues.

Afin de pouvoir transférer plus efficacement ce moyen de développement des surfaces par l'utilisation de billes vers les besoins de l'industrie du traitement thermique des boues, il a donc été ingénié un procédé et son dispositif selon la présente invention.

Le procédé selon l'invention est caractérisé par le brassage d'1 kg de boue organique provenant d'une station d'épuration des eaux polluées, boue dont la siccité est comprise entre 12 et 18 %, ci après désignée "boue", avec 15 à 30 kg de billes en métal, préférentiellement en acier allié inoxydable, dont les diamètres sont compris entre 8 et 30 mm et dont la température est comprise entre 145 °C et 165 °C, ci après désignées par "billes chaudes", par ce brassage on obtient des billes enrobées de boue dont l'eau libre s'évapore sous l'effet de la chaleur contenue dans les dites billes. Cette évaporation de l'eau libre provoque l'abaissement de la température des billes entre 95 et 105 °C, ci après désignées par "billes tièdes", avec formation à la surface des dites billes tièdes d'une pellicule de matière sèche. En continuant le brassage on provoque le décollement de la dite pellicule et on obtient un mélange de billes tièdes et de particules sèches combustibles.
A ce stade il est introduit dans le mélange billes tièdes et particules sèches, 1,5 à 2,5 kg d'air chaud dont la température est comprise entre 350 °C et 395 °C et dont la pression est comprise entre 8 000 Pa et 25 000 Pa, ci après désigné par "air chaud", laquelle introduction d'air chaud provoque l'ignition des particules sèches avec production de chaleur qui se transmet partiellement aux billes tièdes dont la température remonte entre 145°C et 165 °C. Après combustion complète des dites particules, il reste un mélange de billes chaudes et de cendres issues de la calcination des matières minérales présentes dans la boue d'origine, ces cendres sont constituées de grains très fins non amalgamés, de couleur gris sombre. (Une analyse sommaire de leur composition confirme la présence de CaO, MgO, SiO₂, Fe₂O₃, Al₂O₃, Fe₃(PO₄)2, Ca₃(PO₄)2, AlPO₄, K₃PO₄, Na₃PO₄.) A ce stade il est effectué un tamisage pour séparer les billes chaudes et les cendres et on introduit à nouveau de la boue dans les billes chaudes pour une nouvelle succession d'opérations de brassage, enrobage, séchage, pelliculage, ignition, combustion, séparation. La répétition des opérations permet d'industrialiser le procédé en un cycle continu.

Il est précisé que la plage de températures des billes chaudes, comprise en 145 et 165 °C, résulte d'une contrainte physico-chimique due aux caractéristiques des matières organiques contenues dans les boues ; au dessous de 145 °C, la quantité de chaleur serait insuffisante pour une évaporation complète de l'eau libre, au dessus de 165 °C, il se produirait un craquage des composants organiques avec production de gaz et goudrons, domaine de la pyrolyse.
Le calcul précis des dosages et débits d'air, de boue et de billes permet de définir l'application du procédé en fonction du résultat recherché qui est l'élimination d'une certaine quantité de boue dans un espace temps déterminé, ce calcul est effectué en connaissant la siccité de la boue et son PCI sur sec, les formules appliquées sont du domaine courant de la thermochimie.
Pour exemple, avec une boue à 15 % de siccité et un PCI sur sec de 18 664 kJ / Kg, et une teneur en matière organique de 81 % sur sec, la quantité de boue à éliminer étant de 71 kg par heure, le calcul donne les résultats ci après:
1520 kg / h de billes, 71 kg / h de boue et 107 kg / h d'air,
la réaction d'oxydation thermique et la combustion complète produiront 113 kg / h de CO₂ + N₂, 63 kg / h d'eau condensée et condensats des fumées, et 2 kg / h de cendres.

Le dispositif pour la mise oeuvre du procédé selon la présente invention, est caractérisé par une association de moyens et se compose d'une charge de billes, préférentiellement en acier inoxydable, en circulation continue dans une succession de moyens comprenant un réacteur, un tamis, un sécheur, un moyen de transfert entre sécheur et réacteur, les fumées et les buées issues des opérations sont traitées dans un condenseur à mélange et un désodoriseur.
Le réacteur est constitué par une colonne à chicanes, une chambre primaire d'oxydation thermique, une chambre secondaire de post combustion, une boite à fumées, un extracteur à clapet, une tubulure d'injection d'air chaud, une tubulure d'injection d'air secondaire, une sortie des fumées.

Pour la bonne compréhension du dispositif, le terme "billes chaudes" désigne les billes dont la température est comprise entre 145 et 165 °C, le terme "billes tièdes" désigne les billes dont la température est comprise entre 95 et 105 °C, le terme "air chaud" désigne l'air primaire dont la température est comprise entre 350 et 395 °C et dont la pression est comprise entre 8 000 et 25 000 Pa, le terme "air secondaire" désigne l'air additionnel pour réaliser la post combustion.

Le réacteur reçoit le mélange billes tièdes plus particules sèches combustibles en sa partie supérieure par l'intermédiaire d'une colonne à chicanes, le dit mélange traverse le réacteur par un mouvement descendant, le dit mouvement descendant résulte d'un système d'extraction situé en partie basse du dit réacteur. Dans le réacteur, le dit mélange traverse successivement une chambre primaire d'oxydation thermique dans laquelle les particules sont mises en ignition par une injection d'air chaud, et une chambre secondaire de post combustion dans laquelle les particules en ignition terminent leur combustion par une injection d'air secondaire. En sortie de la chambre secondaire, les billes sont chaudes et les particules sèches combustibles ont été totalement oxydées. Le flux de billes chaudes ne contient plus que les cendres issues des matières minérales présentes dans la boue d'origine. Le mélange billes chaudes plus cendres est soutiré en continu au moyen d'un extracteur à clapet situé en la partie basse du réacteur. Les cendres sont séparées des billes chaudes au moyen d'un tamis, les billes chaudes sont dirigées vers le sécheur et les cendres sont collectées dans un récipient.
Les fumées sont également dirigées vers le sécheur. Dans le sécheur les billes chaudes sont brassées avec la boue et les fumées pour provoquer l'évaporation de l'eau libre de la boue et obtenir un mélange billes tièdes plus particules sèches combustibles. Le sécheur est une machine avec deux vis sans fin qui tournent en sens inverse l'une de l'autre, il est équipé pour recevoir les billes chaudes, les fumées et la boue en continu. Le mélange obtenu après séchage, billes tièdes plus particules sèches combustibles, est extrait du sécheur par gravité et repris par un transporteur à vis par exemple, cet exemple n'étant pas limitatif, lequel transporteur se déverse dans l'entrée de la colonne à chicanes située au dessus du réacteur.
Les fumées et les buées qui sortent du sécheur sont dirigées vers un condenseur à mélange et un désodoriseur.

La chambre primaire d'oxydation thermique du réacteur est constituée d'une virole perforée en acier réfractaire, les perforations sont destinées à permettre le passage de l'air chaud vers l'intérieur de la chambre, la dite virole est entourée d'une enveloppe en acier réfractaire formant enceinte pour recevoir l'air chaud en provenance d'un moyen de chauffage. L'air chaud est envoyé dans la dite enceinte au moyen d'un tube en acier réfractaire en liaison avec un moyen de chauffage du dit air tel qu'une résistance électrique par exemple, cet exemple n'étant pas limitatif.

La chambre secondaire de post combustion du réacteur est constituée d'une virole en acier réfractaire et perforée en sa partie supérieure, les perforations sont destinées à permettre le passage de l'air secondaire vers l'intérieur de la chambre, la dite virole est entourée d'une enveloppe en acier réfractaire formant enceinte pour recevoir l'air secondaire destiné à la post combustion. L'air secondaire est envoyé dans la dite enceinte au moyen d'un tube en acier positionné en la partie basse de l'enceinte de façon que le dit air secondaire se réchauffe au contact de la partie non perforée de la virole avant de pénétrer dans la chambre secondaire.

La quantité et la pression de l'air destiné à la chambre primaire et à la chambre secondaire sont obtenus au moyen d'une machine tournante, une soufflante par exemple, cet exemple n'étant pas limitatif La régulation des débits et des pressions est obtenue par l'interposition de vannes entre la soufflante et les tubulures d'entrées des enceintes.

Le fond de la chambre secondaire est constitué par une virole conique perforée en acier réfractaire et équipée en partie basse d'une tubulure pour le passage des billes chaudes et des cendres. L'utilité de la trémie conique perforée est de permettre l'évacuation des fumées vers la boite à fumées qui ferme l'ensemble du réacteur.

La boite à fumée est constituée par une virole en acier réfractaire équipée pour recevoir les deux tubulures d'injection d'air qui la traverse et le tube d'évacuation des fumées vers le sécheur, cette virole est fermée en partie haute par un couvercle équipé d'un passage pour la colonne à chicanes et fermée en partie basse par un fond conique équipé pour recevoir l'extracteur à clapet.

Cet extracteur à clapet est construit en acier réfractaire et équipé d'un clapet réglable commandé par un vérin pneumatique par exemple, cet exemple n'étant pas limitatif. Le clapet est asservi à un dispositif de sécurité qui commande la fermeture instantanée du dit clapet en cas dé coupure de courant électrique ou de toute autre cause qui exige cette fermeture.

La régularité de l'extraction est obtenue par un vibreur placé sur une génératrice externe de la partie basse conique de la boite à fumées.

Le dispositif d'extraction communique avec un tamis constitué par une grille qui sépare deux circuits, un circuit qui dirige les billes chaudes vers le sécheur et un circuit qui dirige les cendres vers un récipient de réception.

Le tamis et les circuits sont construits en acier inoxydable. Les cendres sont évacuées à l'extérieur du système au moyen d'un transporteur à vis par exemple, cet exemple n'étant pas limitatif.

Le sécheur est constitué par deux vis sans fin qui tournent en sens inverse l'une de l'autre dans une auge, ce système de rotations inverses provoque le brassage des billes chaudes avec la boue. L'extrémité de l'auge est équipée pour évacuer par gravité le mélange billes tièdes plus particules sèches combustibles vers le moyen qui assure le transfert entre le sécheur et l'entrée de la colonne à chicanes du réacteur. Le sécheur est fermé par un capot équipé pour recevoir les billes chaudes en provenance du tamis, les fumées en provenance de la boite à fumées, et la boue en provenance de la station d'épuration, et également équipé pour évacuer les fumées et les buées vers le condenseur à mélange. L'ensemble des éléments constitutifs du sécheur est construit en acier inoxydable.

Le moyen de transfert des billes tièdes plus particules sèches combustibles entre le sécheur et l'entrée de la colonne à chicanes du réacteur est un transporteur à vis par exemple, cet exemple n'étant pas limitatif, il est équipé des accessoires standards pour recevoir et évacuer, il est construit en acier inoxydable. Le dispositif d'évacuation communique avec l'entrée de la boite à chicanes qui est située au dessus du réacteur.

La colonne à chicanes est fixée au dessus de la chambre primaire du réacteur et est constituée d'un tube carré en acier inoxydable à l'intérieur duquel sont soudées des chicanes également en acier inoxydable et inclinées à 45° vers le bas. L'utilité de ces chicanes inclinées vers le bas est de provoquer une perte de charge très importante et ainsi obliger l'air et les fumées à suivre le circuit descendant par les espaces vides entre les billes.

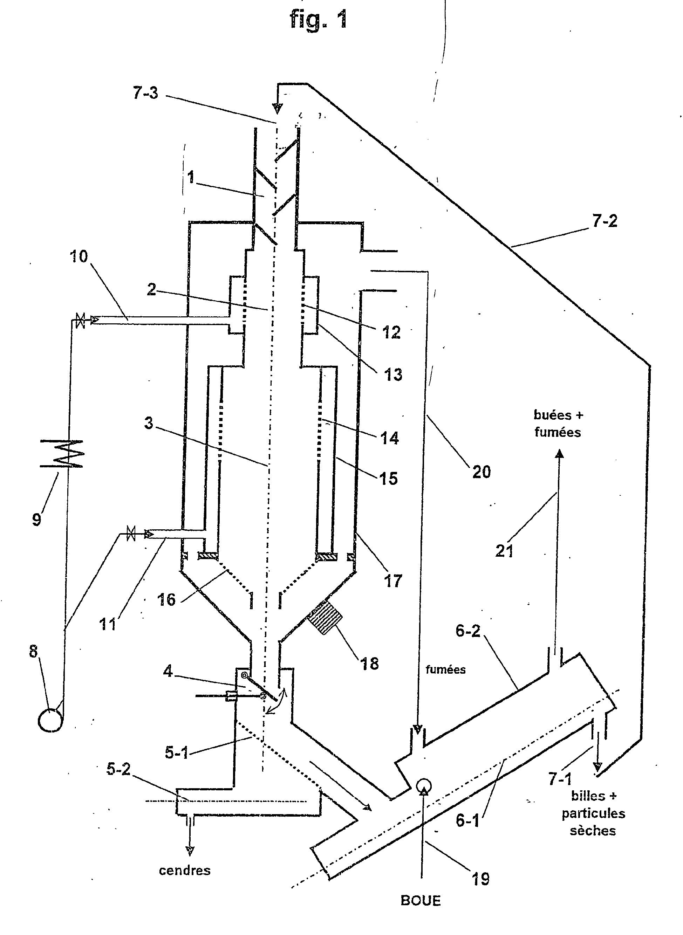

Le dispositif sera mieux compris en référence à la figure 1 sur laquelle on a représenté en (1) la colonne à chicanes, en (2) la chambre primaire d'oxydation thermique, en (3) la chambre secondaire de post combustion, en (4) l'extracteur à clapet, en (5-1) le tamis séparateur des billes chaudes et des cendres, en (5-2) le transporteur d'évacuation des cendres, en (6-1) le sécheur à double vis en rotations inverses, en (6-2) le capot du sécheur, en (7-1) la sortie du mélange billes tièdes plus particules sèches, en (7-2) le circuit d'un moyen de transfert vers la colonne à chicanes, en (7-3) l'entrée du mélange billes tièdes plus particules sèches dans la colonne à chicanes, en (8) la soufflante, en (9) le réchauffeur d'air primaire, en (10) la tubulure d'injection d'air chaud dans la chambre primaire d'oxydation thermique, en (11) la tubulure d'injection d'air secondaire dans la chambre secondaire de post combustion, en (12) la virole perforée de la chambre primaire d'oxydation thermique, en (13) l'enceinte qui reçoit l'air chaud, en (14) la virole perforée de la chambre secondaire de post combustion, en (15) l'enceinte qui reçoit l'air secondaire de post combustion, en (16) la virole conique perforée, en (17) la boite à fumée, en (18) le vibreur, en (19) l'injection boue, en (20) l'injection des fumées dans le sécheur en provenance de la boite à fumées, en (21) l'extraction buées et fumées vers leur traitement.

Le dispositif est construit, mécanisé, motorisé, calorifugé, instrumenté, automatisé et sécurisé par les moyens industriels ordinaires et / ou spécialisés utilisés dans les domaines du génie chimique, du génie mécanique et du génie thermique, et à la portée de l'homme de l'art.

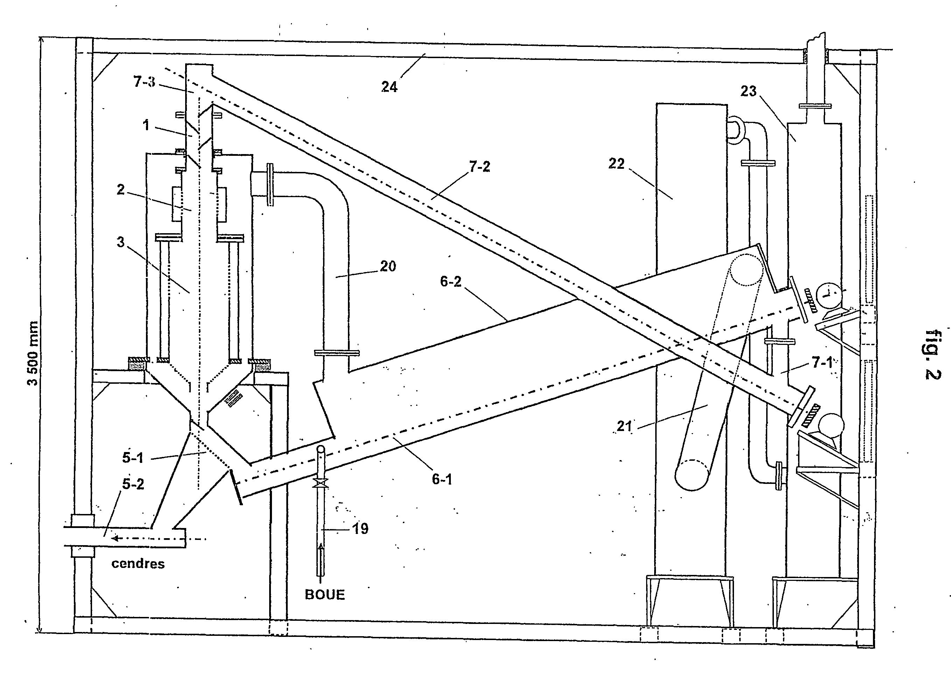

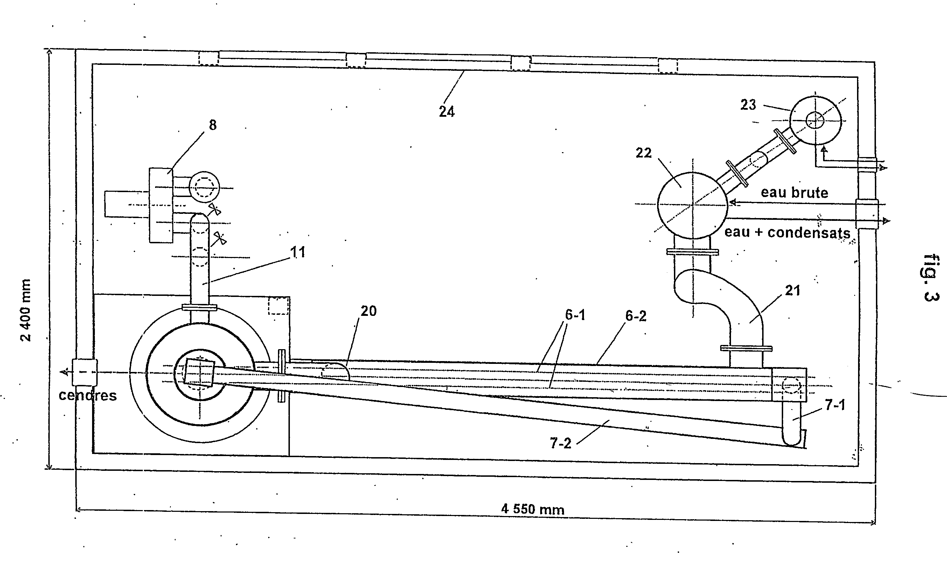

Pour un exemple de réalisation, on a dimensionné le dispositif pour une station d'épuration des eaux polluées urbaines d'une capacité de 3 000 Equivalents Habitants et produisant 360 m³ / an de boue à la siccité de 15 % avec une teneur de 81 % en matières organiques dont le PCI sur sec est de 18 664 kJ/kg, le dispositif fonctionnant 24 h / jour, 5 jours / semaine, 42 semaines / an, soit 5 040 h / an ;
Les caractéristiques du dispositif seront 1 520 kg / h de billes, 71 kg / h de boue et 107 kg / h d'air, les réactions d'oxydation thermique et post combustion produiront 113 kg / h de CO₂ + N₂, 63 kg / h d'eau condensée et condensats des fumées, et 2 kg / h de cendres.
Le dispositif complet est logé dans un conteneur mobile de 4,55 m de long x 2,40 m de large x 3,50 m de hauteur, y compris le condenseur à mélange et le désodoriseur.
L'air provient d'une soufflante avec moteur de 1,10 kW, il est préchauffé par une résistance électrique de 4 kW.
Le sécheur à double vis en rotations inverses est motorisé avec un réducteur de vitesse et un moteur de 0,180 kW, les vis ont un diamètre de 80 mm sur extérieur spires et une longueur totale de 3,50 m en bout d'axe, leur vitesse de rotation est de 13 t / mn. L'injection boue est obtenue par une pompe péristaltique fonctionnant en charge sous silo tampon (non représenté), motorisée avec un moteur de 1,10 kW.
L'exemple de ce dispositif industrialisé sera mieux compris en référence aux figures 2 et 3, la figure 3 étant la vue de dessus de la figure 2, sur lesquelles on a représenté en (1) la colonne à chicanes, en (2) la chambre primaire d'oxydation thermique, en (3) la chambre secondaire de post combustion, en (5-1) le tamis séparateur des billes chaudes et des cendres, en (5-2) le transporteur à vis sans fin pour l'évacuation des cendres, en (6-1) le sécheur à double vis en rotations inverses, en (6-2) le capot du sécheur, en (7-1) la sortie du mélange billes tièdes plus particules sèches, en (7-2) le transporteur à vis sans fin pour le transfert du mélange billes tièdes plus particules sèches vers la colonne à chicanes, en (7-3) l'entrée du mélange billes tièdes plus particules sèches dans la colonne à chicanes, en (8) la soufflante, en (11) la tubulure d'injection d'air secondaire dans la chambre secondaire de post combustion, en (19) l'injection boue, en (20) l'injection des fumées dans le sécheur en provenance de la boite à fumées, en (21) l'extraction buées et fumées vers le condenseur à mélange, en (22) le condenseur à mélange, en (23) le désodoriseur.

Le procédé et son dispositif sont particulièrement destinés au traitement thermique in situ des boues organiques sur site des petites et moyennes stations d'épuration des eaux polluées, tant urbaines qu'industrielles ou militaires ou sur navire, cette caractérisation n'étant pas limitative, le procédé et son dispositif pouvant être étendus au traitement thermique in situ des boues sur le site des très grandes stations d'épuration selon le même calcul de dimensionnement que pour les petites stations.

## Revendications

1. Procédé d'oxydation thermique des boues organiques comportant les étapes suivantes :
- brassage d'1 kg de boue organique provenant d'une station d'épuration des eaux polluées, boue dont la siccité est comprise entre 12 et 18 %, ci après désignée "boue", avec 15 à 30 kg de billes en métal, préférentiellement en acier allié inoxydable, dont les diamètres sont compris entre 8 mm et 30 mm et dont la température est comprise entre 145 °C et 165 °C, ci après désignées par "billes chaudes", par ce brassage on obtient des billes enrobées de boue dont l'eau libre s'évapore sous l'effet de la chaleur contenue dans les dites billes, cette évaporation de l'eau libre provoquant l'abaissement de la température des billes entre 95 et 105 °C, ci après désignées par "billes tièdes", avec formation à la surface des dites billes tièdes d'une pellicule de matière sèche;
- poursuite du brassage on provoque le décollement de la dite pellicule et on obtient un mélange de billes tièdes et de particules sèches combustibles ;
- introduction dans le mélange billes tièdes et particules sèches, 1,5 à 2,5 kg d'air chaud dont la température est comprise entre 350 °C et 395 °C et dont la pression est comprise entre 8 000 Pa et 25 000 Pa, ci après désigné par "air chaud", laquelle introduction d'air chaud provoquant l'ignition des particules sèches avec production de chaleur qui se transmet partiellement aux billes tièdes dont la température remonte entre 145 °C et 165 °C, puis la combustion complète des dites particules, et générant ainsi un mélange de billes chaudes et de cendres issues de la calcination des matières minérales présentes dans la boue d'origine ;
- tamisage pour séparer les billes chaudes et les cendres et nouvelle introduction de la boue dans les billes chaudes pour une nouvelle succession d'opérations de brassage, enrobage, séchage, pelliculage, ignition, combustion, séparation répétées pour former un cycle continu.

2. Dispositif pour la mise oeuvre du procédé selon la revendication 1 **caractérisé par** une charge de billes en acier inoxydable dont le diamètre est compris entre 8 et 30 mm, en circulation continue dans une association de moyens comprenant un réacteur, un tamis, un sécheur, un moyen de transfert entre sécheur et réacteur, les fumées et les buées issues des opérations étant traitées dans un condenseur à mélange et un désodoriseur, le réacteur du dispositif étant composé d'une colonne à chicanes (1) en acier inoxydable dont les chicanes sont inclinées à 45° vers le bas, une chambre primaire d'oxydation thermique (2) en acier réfractaire dont la virole (12) est perforée pour le passage de l'air chaud provenant de l'enceinte (13)) qui reçoit une tubulure (10) d'injection d'air chaud en provenance du réchauffeur (9), une chambre secondaire de post combustion (3) en acier réfractaire dont la virole (14) est perforée pour le passage de l'air secondaire provenant de l'enceinte (15) qui reçoit une tubulure (11) d'injection d'air secondaire, l'air primaire et l'air secondaire étant produits par une soufflante (8), chambre secondaire comportant un fond conique (16) qui est perforé pour le passage des fumées vers la boite à fumées (17), une boite à fumée (17) en acier réfractaire comportant un fond conique équipé d'un vibreur (18) et un couvercle qui reçoit le passage de la colonne à chicanes (1), la dite boite à fumée étant également équipée de deux passages pour les tubulures (10) et (11) et d'une tubulure de sortie des fumées (20) raccordée avec le capot (6-2) du sécheur, un extracteur à clapet (4) en acier réfractaire fixé sur le fond conique de la boite à fumée (17), le quel extracteur communique avec un tamis de séparation des billes et des cendres (5-1), le tamis (5-1) du dispositif étant équipé d'une grille en acier inoxydable, un circuit billes et un circuit cendres, un transporteur à vis (5-2) pour l'évacuation des cendres, lequel tamis déverse les billes dans un sécheur, le sécheur du dispositif étant construit en acier inoxydable et équipé avec deux vis sans fin (6-1) en rotation inverse l'une par rapport à l'autre, et un capot (6-2) lui même équipé d'une tubulure (20) qui reçoit les fumées en provenance de la boite à fumées (17), et équipé d'une tubulure (19) pour l'injection de boue, une tubulure (21) pour la sortie des buées et fumées vers un condenseur à mélange (22), le dit sécheur se déversant par un conduit (7-1) dans un transporteur à vis sans fin (7-2) qui assure le transfert des billes entre le sécheur et la colonne à chicanes (1), les buées et fumées issues du sécheur par la tubulure (21) étant traitées dans un condenseur à mélange (22) et un désodoriseur (23).

## Claims

1. Process of thermal oxidation of organic sludge consisting of the following stages:
- mixing 1 kg of organic sludge from a polluted water treatment station, with a dryness of between 12 and 18%, and hereafter called "sludge", with 15 to 30 kg of metal balls, preferentially of alloyed stainless steel, with diameters of between 8 mm and 30 mm, at a temperature of between 145°C and 165°C, hereafter called "hot balls", to produce balls coated with the sludge, whose interstitial water evaporates under the effect of the heat of the said balls, this evaporation of the interstitial water causing the temperature of the balls to fall to between 95 and 105°C, hereafter called "tepid balls", with formation on the surface of the said tepid balls of a film of dry matter;
- continued mixing causing the said film to separate from the balls and create a mixture of tepid balls and dry combustible particles;
- blowing into the mixture of tepid balls and dry particles of 1.5 to 2.5 kg of hot air with a temperature of between 350°C and 395°C and a pressure of between 8000 Pa and 25000 Pa, hereafter called "hot air", this hot air causing the dry particles to ignite and generate heat which is partially transmitted to the tepid balls at temperatures of between 145°C and 165°C, followed by complete combustion of the said particles, thus generating a mixture of hot balls and ash by calcination of the mineral substances in the original sludge;
- passage through a sieve to separate the hot balls from the ash and
- new introduction of sludge into the hot balls for a new sequence of mixing, coating, drying, stripping, ignition, combustion and separation operations to constitute a continuous cycle.

2. Device for implementing the method according to claim 1 **characterized by** a load of stainless steel balls with diameters between 8 and 30 mm, continuously circulating in an association of means comprising a reactor, a sieve, a drier, and means for transport between the drier and reactor, fumes and vapour from the treatment operations being treated in a mixing condensor and deodorizing apparatus, the reactor consisting of a column with baffles (1) made of stainless steel, the baffles being tilted at 45° relative to the bottom, a primary thermal oxidation chamber (2) made of high-temperature steel the shell (12) of which is perforated to allow the passage of hot air from enclosure (13), with a nozzle (10) for the injection of hot air from heater (9), a secondary post combustion chamber (3) in high-temperature steel the shell (14) of which is perforated to allow the passage of the secondary air from enclosure (15) with a nozzle (11) for injection of the secondary air, the primary air and secondary air being generated by a blower (8), the secondary chamber having a conical bottom (16) which is perforated to allow the passage of the fumes towards smoke box (17), smoke box (17) in high-temperature steel with conical bottom equipped with vibrator (18) and a cover with passage of baffle column (1), said smoke box also being equipped with two passages for nozzles (10) and (11) and a fumes discharge nozzle (20) connected to cover (6-2) of the drier, extractor valve (4) made of high-temperature steel fixed on the conical bottom of smoke box (17), whose extractor is connected to a screen separating the balls from the ash (5-1), sieve (5-1) of the device being equipped with stainless steel mesh, a ball circuit and an ash circuit, a screw conveyor (5-2) for extraction of the ash, the sieve discharging the balls into a drier, the drier being made of stainless steel and equipped with two endless screws (6-1) with opposite rotations, and a cover (6-2) itself equipped with a nozzle (20) receiving the fumes from smoke box (17), and equipped with a nozzle (19) for sludge injection, a nozzle (21) for vapour and fumes discharge towards a mixing condensor (22), the said drier discharging through a pipe (7-1) into a screw conveyor (7-2) which transfers the balls between the drier and baffle column (1), the vapour and fumes discharged by nozzle (21) being treated in a mixing condensor (22) and deodorizing apparatus (23).

## Patentansprüche

1. Verfahren zur thermischen Oxidation organischer Schlämme mit folgenden Schritten:
- Vermischen von 1 kg organischem Schlamm aus einer Kläranlage mit einem Trockenmassegehalt von 12 bis 18 %, nachstehend mit "Schlamm" bezeichnet, mit 15 bis 30 kg Metallkugeln, vorzugsweise aus Edelstahl, mit einem Durchmesser von 8 mm bis 10 mm und einer Temperatur von 145°C bis 165°C, nachstehend mit "heiße Kugeln" bezeichnet, so dass mit Schlamm umhüllte Kugeln entstehen, deren freies Wasser unter dem Einfluss der in den Kugeln enthaltenen Wärme verdunstet und diese Verdunstung des freien Wassers zu einem Sinken der Temperatur der Kugeln auf 95°C bis 105°C führt, die nachstehend mit "warme Kugeln" bezeichnet werden, wobei sich an der Oberfläche der genannten warmen Kugeln eine Haut aus Trockenmasse bildet.
- Fortsetzen des Mischvorgangs, was das Ablösen der genannten Haut bewirkt und zu einer Mischung aus warmen Kugeln und trockenen, brennbaren Partikeln führt;
- Einleitung von 1,5 bis 2,5 kg Warmluft mit einer Temperatur zwischen 350°C und 395°C und einem Druck von 8000 Pa bis 25000 Pa in diese Mischung aus warmen Kugeln und Trockenpartikeln, wobei die genannte Einleitung von Warmluft die Trockenpartikel entzündet, so dass Wärme entsteht, die teilweise an die warmen Kugeln abgegeben wird, wodurch deren Temperatur auf 145°C bis 165°C ansteigt und bis zur vollständigen Verbrennung führt, d.h. zu einer Mischung bestehend aus heißen Kugeln und Asche, die bei der Verbrennung der ursprünglich im Schlamm vorhandenen mineralischen Stoffe entsteht;
- Trennung der heißen Kugeln und der Asche durch Sieben und dem erneuten Einleiten von Schlamm in die heißen Kugeln für einen neuen Ablauf der Schrittfolge bestehend aus Mischung, Umhüllung, Trocknung, Hautbildung, Entzündung und Verbrennung, die so einen ununterbrochenen Zyklus bildet.

2. Vorrichtung zur Anwendung des Verfahrens gemäß Patentanspruch 1, **gekennzeichnet durch** eine Ladung Edelstahlkugeln mit einem Durchmesser zwischen 8 und 30 mm, die sich in ständigem Umlauf in einer Reihe zusammengehörender Mittel befinden, zu denen ein Reaktor, ein Sieb, ein Trockner und eine Fördereinrichtung zwischen dem Trockner und dem Reaktor gehören, bei der die bei den Arbeiten entstehenden Rauchgase und Brüden in einem Mischkondensator und in einem Geruchsabscheider behandelt werden, wobei der Reaktor der Vorrichtung aus einer mit unter 45° nach unten geneigten Ablenkelementen bestückten Kolonne (1), aus Edelstahl, einer primären thermischen Oxidationskammer (2) aus hitzebeständigem Stahl, deren Kammerwand (12) perforiert ist, um Sekundärluft aus der Kammer (13) durchtreten zu lassen, die einen Stutzen (10) zum Einleiten von Warmluft aus dem Erhitzer (9) besitzt, einer sekundären Nachverbrennungskammer (3) aus hitzebeständigem Stahl, deren Wand (14) zum Durchlassen der Sekundärluft aus der Kammer (15) perforiert ist, welche einen Stutzen (11) zur Einleitung von Sekundärluft besitzt, wobei die Primär- und die Sekundärluft von einem Gebläse (8) erzeugt werden, bei der die Sekundärkammer einen kegelförmigen Boden (16) besitzt, der zum Durchlassen der Rauchgase in die Rauchgaskammer (17) perforiert ist, bei der die aus hitzebeständigem Stahl bestehende Rauchgaskammer (17) einen kegelförmigen Boden mit Rüttler (18) und Deckel besitzt, der in den die Durchführung der Kolonne mit den Ablenkelementen (1) einmündet, bei der die genannte Rauchgaskammer außerdem mit zwei Durchführungen für die Stutzen (10) und (11) versehen ist, sowie mit einem Stutzen für den Rauchgasaustritt (20), der mit dem Haube (6-2) des Trockners verbunden ist, bei der eine Aufgabeklappe (4) aus hitzebeständigem Stahl am Boden des kegelförmigen Bodens der Rauchgaskammer (17) befestigt ist und diese Aufgabeklappe mit einem Sieb zum Trennen der Kugeln und der Asche (5-1) in Verbindung steht, bei der das Sieb (5-1) der Vorrichtung mit einem Edelstahlrost, einem Kanal für die Kugeln und einem Kanal für die Asche sowie einem Schneckenförderer (5-2) zum Abführen der Asche versehen ist, und dieses Sieb die Kugeln in einen Trockner leitet, bei der der Trockner der Vorrichtung aus Edelstahl hergestellt und mit zwei gegenläufig drehenden Schnecken (6-1) und einer Haube (6-2) versehen ist, die ihrerseits einen Stutzen (20) zur Aufnahme der Rauchgase aus der Rauchgaskammer (17) besitzen und einen Stutzen (19) zum Einleiten des Schlamms, einen Stutzen (21) zum Austritt der Brüden und Rauchgase in einen Mischkondensator (22) besitzt, wobei der genannte Trockner seinen Inhalt über einen Kanal (7-1) in einen Schneckenförderer (7-2) abgibt, welcher den Transport der Kugeln zwischen dem Trockner und der Kolonne mit den Ablenkelementen (1) bewirkt, bei der die über den Stutzen (21) aus dem Trockner kommenden Brüden und Rauchgase in einem Mischkondensator (22) und einem Geruchsabscheider (23) behandelt werden.
